# EUROPÄISCHE PATENTSCHRIFT

(11) **EP 0 586 671 B1**
(45) Veröffentlichungstag und Bekanntmachung des Hinweises auf die Patenterteilung: **10.01.1996**
(21) Anmeldenummer: 93907765.7
(22) Anmeldetag: 30.03.1993
(51) Int. Cl.: F16G 13/16, F16L 3/01, H02G 11/00

(54) **ENERGIEFÜHRUNGSKETTE**
POWER TRANSMISSION CHAIN
CHAINE CONDUCTRICE D'ENERGIE

(30) Priorität: 01.04.1992 DE 4210674
(43) Veröffentlichungstag der Anmeldung: 16.03.1994
(73) Patentinhaber: IGUS SPRITZGUSSTEILE FÜR DIE INDUSTRIE GmbH, D-51147 Köln (DE)
(72) Erfinder: BLASE, Günter, D-5060 Bergisch Gladbach 2 (DE)
(74) Vertreter: Stachow, E.-W., Prof. Dr.
(86) Internationale Anmeldenummer: DE9300296
(87) Internationale Veröffentlichungsnummer: WO9320366

(56) Entgegenhaltungen:
- DE-C- 3 928 237
- DE-C- 3 930 291
- US-A- 4 392 344

## Beschreibung

Die Erfindung betrifft eine Energieführungskette, deren Kettenglieder je zwei Seitenwände und ein diese an ihren Längskanten miteinander verbindendes Stabilisierungselement sowie einen die beiden Seitenwände verbindenden, auf ein und/oder beide Längskantenpaare aufschnappbaren Deckel aufweisen, wobei die aufeinanderfolgenden Kettenglieder gelenkig miteinander verbunden sind, die Deckel an den entsprechenden Längskanten der Seitenwände lösbar befestigbar sind und die Deckel aufeinanderfolgender Kettenglieder miteinander verbindbar sind.

Eine derartige Energieführungskette ist z.B. aus der DE-PS 3930291 bekannt. Die dort beschriebene Energieführungskette besteht aus Kettengliedern, die zwei Seitenwände und einen diese verbindenden Quersteg und einen auschnappbaren Deckel umfassen. Die Deckel der Energieführungskette sind mit Krallen und die oberen Ränder der Seitenwände mit Rastausschnitten zur lösbaren Aufnahme der Krallen versehen und die Deckel sind gelenkig durch Rundstäbe und diese aufnehmende Langlöcher miteinander verbunden. Dabei sind Schlitze vorgesehen, die ein Einrasten der Rundstäbe in die Schlitze bzw. Herausnehmen aus diesen gestatten. Besonders vorteilhaft bei derartigen Energieführungsketten ist, daß die Dekkel alle als zusammenhängender Strang abnehmbar bzw. abreißbar sind.

Der Einsatz derartiger Energieführungsketten, die sich in der Praxis vielfach bewährt haben, ist auch bei Computern, Büromaschinen, Meßinstrumenten oder anderen Elektrogeräten, in denen sehr kleine Kabel oder Drähte verwandt werden, denkbar und wünschenswert.

Ein Nachteil der aus der DE-PS 3930291 bekannten Energieführungskette ist, daß diese sich nicht beliebig klein fertigen läßt. Zum einen verlieren wichtige Teile, wie z.B der in der DE-PS 3930291 beschriebene Rundstab, die für das Abnehmen der Deckel erforderliche Festigkeit und zum anderen verringert sich der für diese Teile zur Verfügung stehende Konstruktionsraum überproportional. Das bedeutet, daß sich die zur Verfügung stehende Bauhöhe für die Verbindungselemente der Deckel derartig verringert, daß diese nicht mehr mit der ausreichenden Festigkeit gefertigt werden können. Darüberhinaus verringert sich auch die Handhabbarkeit der Verbindungselemente (Rundstäbe und dazugehörige geschlitzte Langlöcher). Eine Verringerung der Innenabmessungen der Energieführungskette, um so den gewünschten Konstruktionsraum zu schaffen, ist nicht wünschenswert, da das Verhältnis von Innenabmessungen zu Außenabmessungen der mit Deckeln verschlossenen Energieführungskette bei allen Baugrößen von Energieführungsketten gleich sein sollte.

Bei der Energieführungskette, die nach dem zuvor beschriebenen Prinzip konstruiert ist, treten außerdem bei starker Abwinkelung der Kettenglieder untereinander sehr große Reibungskräfte in dem Bereich auf, wo der besagte Rundstab, je nach Richtung der Abwinkelung der Kettenglieder, mit der oberen oder unteren Wandung des Langloches in Berührung kommt. Bei großen Kettengliedern haben diese Reibungskräfte praktisch keinen Einfluß. Würden die Kettenglieder maßstäblich stark verkleinert, würden die Reibungskräfte die Laufeigenschaften der Energieführungskette stark beeinträchtigen. Folglich wäre es nicht möglich den Abrollradius, d.h. bei einer Umlenkung der Kette den Abstand von Obertrum zu Untertrum, sehr klein zu wählen.

Aufgabe der vorliegenden Erfindung ist es daher, unter Beibehaltung des Prinzips der Energieführungskette mit gelenkig verbunden Deckeln und der damit verbundenen Vorteile, eine Energieführungskette zu schaffen, die ohne die Eingangs genannten Nachteile mit sehr kleinen Abmessungen herstellbar ist, ausreichende Montagefestigkeit besitzt und bequem und sicher handhabbar ist.

Die Aufgabe wird erfindungsgemäß dadurch gelöst, daß
- der Deckel an einer seiner Stirnseiten eine Verbindungslasche aufweist,
- der Deckel eine Gleitkammer zur Aufnahme einer Verbindungslasche eines benachbarten Deckels aufweist,
- die Verbindungslasche des benachbarten Deckels in der Gleitkammer längsverschiebbar ist,
- die Gleitkammer auf der nach außen weisenden Seite des Deckels und auf der Stirnseite, die der Verbindungslasche abgekehrt ist, zusammenhängende Öffnungen aufweist,
- die Öffnungen der Gleitkammer der Form der Verbindungslasche so angepaßt sind, daß die Verbindungslasche des benachbarten Deckels in einer Position in diese einführbar und herausnehmbar ist und nach einer Längsverschiebung in jede weitere Position durch die Begrenzungen der Gleitkammer gefangen ist.

Gemäß der vorliegenden Erfindung kann also ein Deckel mit dem anderen mit einer Verbindungslasche, die auch noch in kleinen Abmessungen ausreichende Festigkeit aufweist, verbunden werden. Die Verbindungslasche wird in die Gleitkammer eines benachbarten Deckels eingeführt und ist nach einer Längsverschiebung in der Gleitkammer fest eingeschlossen, so daß eine beliebige Anzahl von Deckeln miteinander zu einem Strang verbindbar sind und auf der Energieführungskette befestigt werden können. Die Verbindungslaschen weisen eine ausreichende Festigkeit bei geringstmöglich erforderlichem Konstruktionsraum auf, so daß vor allem auch sehr kleine Deckel leicht in einem Strang wieder von der entsprechenden Energieführungskette abgezogen werden können. Ferner gewährleistet die Längsverschieblichkeit der Verbindungslasche in der Gleitkammer, daß sich die miteinander verbundenen Deckel in montiertem Zustand jeder Abwinkelung der Energieführungskette anpassen und der Abrollradius der Kette kann extrem klein gewählt werden.

Vorteilhaft ist es dabei, wenn das Maß der Längsverschiebbarkeit der Verbindungslasche in der Gleitkammer des benachbarten Deckels an die Abwinkelbarkeit der Kettenglieder zueinander angepaßt ist.

Vorzugsweise ist die Verbindungslasche einstückig mit dem Deckel und als flexibles flaches Band mit rechteckigem Querschnitt ausgebildet. Ein flexibles flaches Band ist besonders gut auf Zug belastbar, was beim Abnehmen des Deckelstranges besonders von Vorteil ist. Zudem läßt sich ein Band mit rechteckigem Querschnitt besonders gut in die Richtung seiner geringsten Ausdehnung biegen und zeichnet sich durch seine geringe Bauhöhe aus.

In der bevorzugten Ausführungsform ist die Verbindungslasche an ihrem freien Ende T - förmig verbreitert. Die Öffnung auf der nach Außen weisenden Seite der Gleitkammer ist zweckmäßigerweise ebenfalls entsprechend der Form der Verbindungslasche T - förmig ausgebildet. Somit ist die Verbindungslasche nur in die Gleitkammer einführbar, wenn die ihre Kontur mit der Kontur der Öffnung der Gleitkammer zur Dekkung gebracht wird. Es ist selbstverständlich jede andere Form der Verbindungslasche und der Öffnung der Gleitkammer denkbar, solange daß vorstehend erläuterte Prinzip verwirklicht wird.

Vorzugsweise ist die Öffnung auf der Stirnseite der Gleitkammer, die der Verbindungslasche abgewandt ist, kleiner als die T - förmige Verbreiterung, so daß diese einen Endanschlag für die Verbindungslasche des benachbarten Deckels bildet.

Damit während des Abwinkelns der Energieführungskette die Verbindungslasche nicht versehentlich aus der Gleitkammer rutschen kann, ist sie vorzugsweise nur dann in die Gleitkammer des benachbarten Deckels einführbar und herausnehmbar ist, wenn der mit ihr verbundene Deckel nicht auf ein Kettenglied aufgeschnappt worden ist.

In der bevorzugten Ausführungsform ist der Deckel an seiner der dazugehörigen Verbindungslasche abgewandten Stirnseite mit einen sich in Längsrichtung des Deckels erstreckenden Überstand versehen. Dieser Überstand dient in gestreckter Position der Kette der Abdeckung der gelenkigen Verbindung der Kettenglieder, so daß die Energieführungskette in gestreckter Lage nahezu vollständig geschlossen ist.

Die Breite des Überstandes Kann im wesentlichen der Breite des Deckels entsprechen und einen Durchbruch aufweisen, dessen Breite im wesentlichen der Breite der T - förmigen Verbreiterung der Verbindungslasche entspricht. In abgewinkelter Lage der Kette dient er dazu, die Verbindungslasche zu führen und zu halten. Beim Verbinden der Deckel untereinander wird die Verbindungslasche des benachbarten Deckels von unten durch den Durchbruch geschoben und dann in die Gleitkammer eingeführt.

Vorzugsweise ist das Stabilisierungselement ein die Seitenwände an ihren unteren Längskanten einstückig miteinander verbindender Quersteg.

Damit die Energieführungskette zum Schutz der darin befindlichen Kabel nicht beliebig durchgebogen werden kann, sind die Seitenwände mit Anschlägen zur Begrenzung der Verschwenkung der Kettenglieder versehen.

Zweckmäßigerweise ist der Deckel mit Krallen versehen, die von Rastausschnitten an den oberen Längskanten der Seitenwände lösbar aufnehmbar sind.

In der bevorzugten Ausführung weisen die Seitenwände jeweils an ihren Innenseiten eine sich nach innen erstreckende Rastfeder auf. Dementsprechend weist die Gleitkammer jeweils an ihren Längsseiten eine Öffnung auf, in die beim Aufschnappen des Deckels die Rastfeder der betreffenden Seitenwand des Kettengliedes eingreift.

Die Erfindung wird anhand der Zeichnungen beispielsweise veranschaulicht und nachfolgend im einzelnen erläutert.

Es zeigen die:

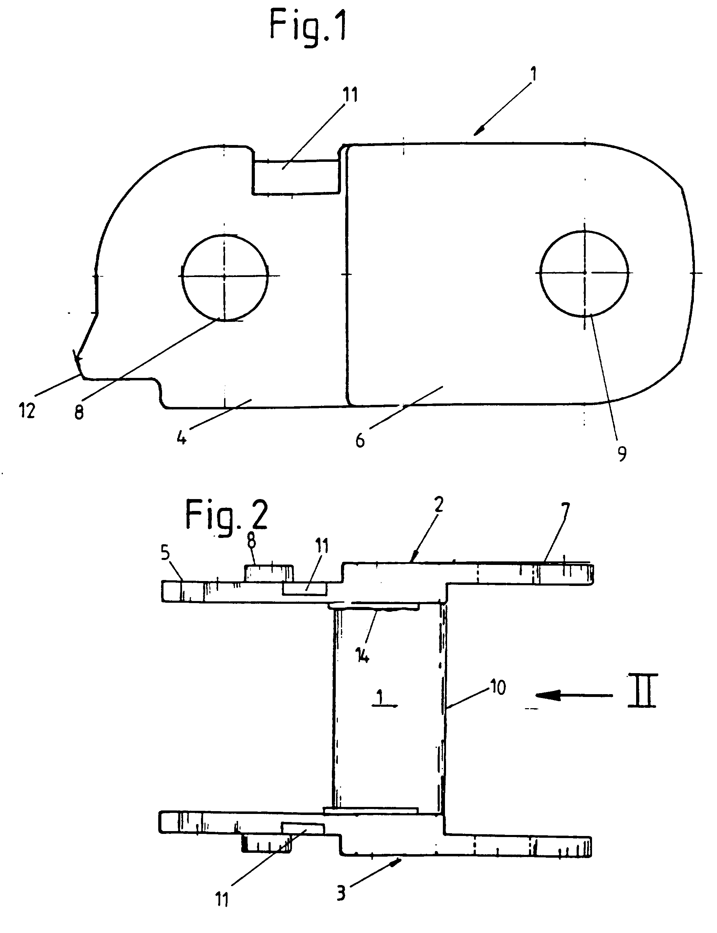

- Fig.1: eine Seitenansicht des Kettengliedes bei abgenommenem Deckel;
- Fig.2: eine Draufsicht auf das Kettenglied;
- Fig.3: eine Ansicht in Richtung des Pfeils II in Figur 1;
- Fig.4: eine Draufsicht auf die nach außen weisende Seite des Deckels;
- Fig.5: eine Seitenansicht des Deckels;
- Fig.6: einen Schnitt entlang der Linien III - III in Figur 4;
- Fig.7: eine Unteransicht des Deckels, bei der der achsensymetrische Teil nicht dargestellt ist, und
- Fig.8: eine Ansicht in Richtung des Pfeils IV in Figur 7.

Wie aus der Zeichnung ersichtlich ist, bestehen die einzelnen Kettenglieder 1 jeweils aus Seitenwänden 2 bzw. 3, die einwärts gekröpfte Teile 4 und 5 und auswärts gekröpfte Teile 6 und 7 umfassen. Von den eingekröpften Teilen 4 bzw.5 stehen Zapfen 8 seitlich vor, während die ausgekröpften Teile an den entsprechenden Stellen Löcher 9 aufweisen. Die Anordnung und Abmessungen der Löcher 9 und Zapfen 8 sind so gewählt, daß die Zapfen 8 eines Kettengliedes 1 in die Löcher 9 eines benachbarten Kettengliedes eingreifen, so daß die Kettenglieder gelenkig miteinander verbunden sind.

Die Seitenwände 2 bzw. 3 sind an ihrer Unterseite durch einen Quersteg 10 einstückig miteinander verbunden. Auf ihrer Oberseite sind die Kettenglieder 1 mittels eines Dekkels fest verschließbar. Zu diesem Zweck sind an der Oberseite der Seitenwände Rastausschnitte 11 zur lösbaren Aufnahme der Deckel vorgesehen.

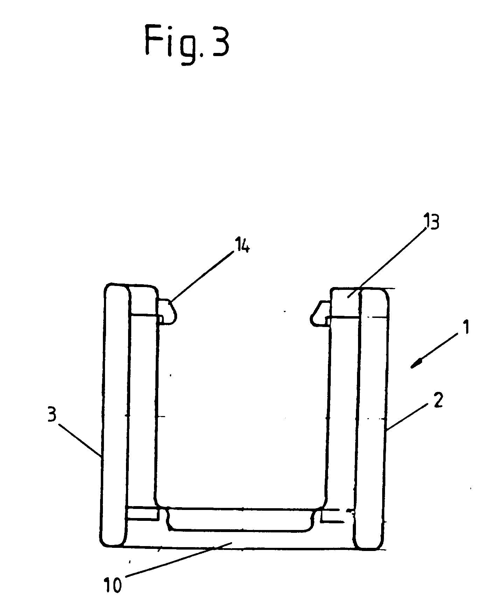

Zur Begrenzung einer Verschwenkung der Kettenglieder zueinander weisen die Seitenwände 2 bzw. 3 an ihren nach innen gekröpften Teilen 4 und 5 jeweils eine Nase 12 auf, welche beim verschwenken der Glieder zueinander in eine gestreckte Lage gegen den Quersteg 10 und beim Verschwenken in die entgegengesetzte Richtung gegen an den oberen Kanten der Seitenwände 2 und 3 angeordnete Halteleisten 13 stoßen und damit einen Anschlag bilden. Die Lage der Halteleisten 13 ist am besten aus Figur 3 zu ersehen.

An den Innenseiten der Halteleisten sind zudem noch Rastfedern 14 angeordnet, die beim Aufschnappen des Deckels in diesen eingreifen.

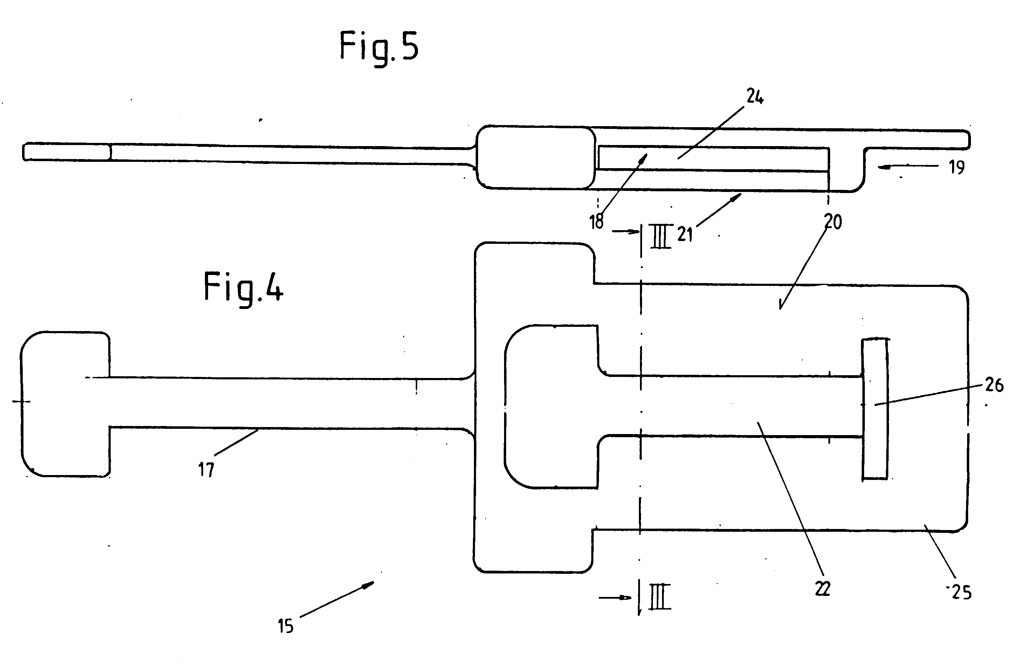

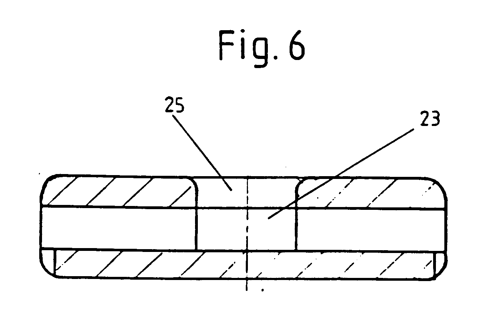

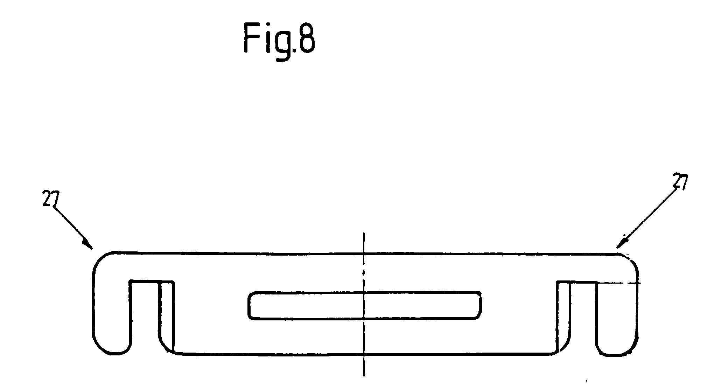

Der zur oberseitigen Abdeckung eines jeden Kettengliedes vorgesehene Deckel 15 ist in den Figuren 4 - 8 dargestellt. Der Deckel 15 besteht aus einem Grundkörper 16 und einer mit diesem einstückig ausgebildeten flexiblen Verbindungslasche 17. Die Verbindungslasche 17 ist an ihrem äußersten Ende T - förmig verbreitert. Der Grundkörper 16 definiert eine Gleitkammer 18 mit einem im wesentlichen rechteckigen Querschnitt zur Aufnahme einer Verbindungslasche eines benachbarten Deckels. Die Gleitkammer 18 ist an ihrer der Verbindungslasche 17 abliegenden Stirnseite 19, an ihrer nach außen weisenden Seite 20 und an ihren Längsseiten 21 mit den Öffnungen 22, 23 und 24 durchbrochen. Die obere Öffnung 22 entspricht in ihrer Form der Form der Verbindungslasche 17. Die Öffnung 23 an der Stirnseite 19 der Gleitkammer 18 ist kleiner als die T - förmige Verbreiterung der Verbindungslasche 17, so daß die Stirnseite 19, wenn die Verbindungslasche 17 des benachbarten Deckels in die Gleitkammer 18 eingeführt worden ist, einen Anschlag für die T-förmige Verbreiterung der Verbindungslasche 17 darstellt.

Oberhalb der Öffnung 23 erstreckt sich ein Überstand 25, der ebenfalls durchbrochen ist. Dieser Durchbruch 26 besitzt Abmessungen, die im wesentlichen den Abmessungen der T - förmigen Verbreiterung der Verbindungslasche 17 entsprechen.

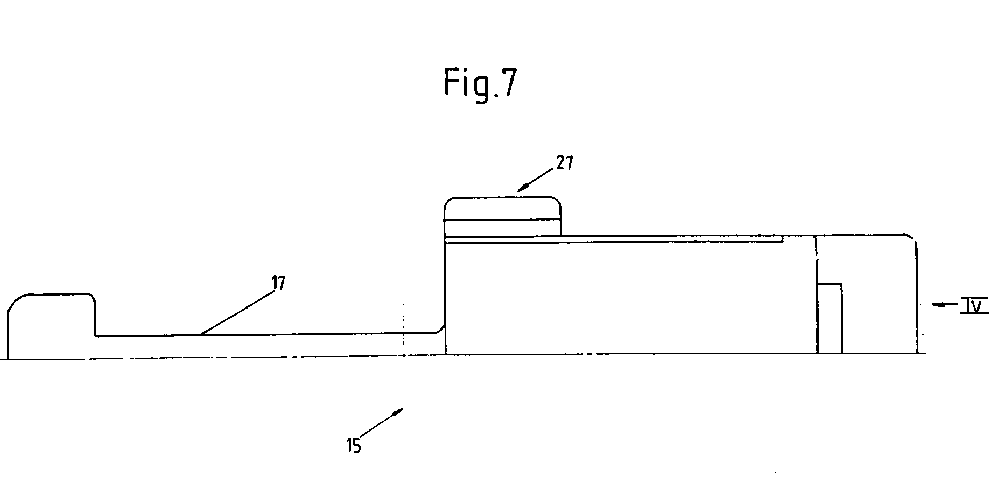

Wie aus der Unteransicht des Deckels 15 in Figur 7 zu erkennen ist, sind seitlich an den Grundkörper 16 des Deckels 15 Krallen 27 angeformt, die beim Aufsetzen des Deckels 15 auf ein Kettenglied 1 in die Rastausschnitte 11 eingreifen.

Zur Montage der Deckel 15 auf der Energieführungskette wird die Verbindungslasche 17 des jeweils benachbarten Deckels von unten durch den Durchbruch 26 des Überstandes 25 geschoben und sodann mit der oberen Öffnung 22 der Gleitkammer 18 zur Deckung gebracht. In dieser Position läßt sich die Verbindungslasche 17 leicht in die Gleitkammer 18 einführen.

Nachdem mehrere Deckel so miteinander verbunden worden sind, wird der erste Deckel 15 auf das entsprechende Kettenglied 1 aufgeschnappt. Dabei greifen die Krallen 27 in die zugehörigen Rastausschnitte 11 und die Rastfedern 14 schnappen die seitlichen Öffnungen 24 der Gleitkammer 18 ein. Die restlichen Deckel werden zum Aufschnappen auf die Kettenglieder 1 leicht gegeneinander verschoben. Die Abmessungen der Dekkel 15 sind derart gewählt, daß in aufgeschnapptem Zustand der Deckel 15 die betreffende Verbindungslasche 17 in der Gleitkammer 18 derart angeordnet ist, daß ein Herausspringen aus der Gleitkammer 18 zuverlässig verhindert wird. Da die Verbindungslaschen 17 in den zugehörigen Gleitkammern 18 längsverschieblich angeordnet sind, paßt sich der zusammenhängende Deckelstrang jeder Abwinkelung der Kettenglieder zueinander an.

Zum Lösen der Deckel kann an einer freien Verbindungslasche in Richtung der Stirnseite 19 gezogen werden, so daß sich der gesamte Deckelstrang von der Energieführungskette löst.

### Bezugszeichenliste

- 1: Kettenglied
- 2: Seitenwand
- 3: Seitenwand
- 4: einwärts gekröpftes Teil
- 5: einwärts gekröpftes Teil
- 6: auswärts gekröpftes Teil
- 7: auswärts gekröpftes Teil
- 8: Zapfen
- 9: Löcher
- 10: Quersteg
- 11: Rastausschnitte
- 12: Nase
- 13: Halteleiste
- 14: Rastfeder
- 15: Deckel
- 16: Grundkörper des Deckels
- 17: Verbindungslasche
- 18: Gleitkammer
- 19: von der Verbindungslasche abliegende Stirnseite der Gleitkammer
- 20: nach außen weisende Seite der Gleitkammer
- 21: Längsseite der Gleitkammer
- 22: obere Öffnung der Gleitkammer
- 23: Öffnung an der Stirnseite der Gleitkammer
- 24: längsseitige Öffnung der Gleitkammer
- 25: Überstand
- 26: Durchbruch
- 27: Kralle

## Patentansprüche

1. Energieführunskette, deren Kettenglieder (1) je zwei Seitenwände (2, 3) und ein diese an ihren Längskanten miteinander verbindendes Stabilisierungselement sowie einen die beiden Seitenwände verbindenden, auf ein und/oder beide Längskantenpaare aufschnappbaren Deckel aufweisen, wobei die aufeinanderfolgenden Kettenglieder gelenkig miteinander verbunden sind, die Deckel (15) an den entsprechenden Längskanten der Seitenwände lösbar befestigbar sind und die Deckel aufeinanderfolgender Kettenglieder miteinander verbindbar sind, **dadurch gekennzeichnet**, daß
- der Deckel (15) an einer seiner Stirnseiten eine Verbindungslasche (17) aufweist,
- der Deckel (15) zueine Gleitkammer (18) zur Aufnahme einer Verbindungslasche (17) eines benachbarten Deckels (15) aufweist,
- die Verbindungslasche (17) des benachbarten Deckels (15) in der Gleitkammer (18) längsverschiebbar ist,
- die Gleitkammer (18) auf der nach außen weisenden Seite des Deckels (15) und auf der Stirnseite, die der Verbindungslasche (17) abgekehrt ist, zusammenhängende Öffnungen (22,23) aufweist,
- die Öffnungen (22,23) der Gleitkammer (18) der Form der Verbindungslasche (17) so angepaßt sind, daß die Verbindungslasche (17) des benachbarten Deckels (15) in einer Position in diese einführbar und herausnehmbar ist und nach einer Längsverschiebung in jede weitere Position durch die Begrenzungen der Gleitkammer (18) gefangen ist.

2. Energieführungskette nach Anspruch 1, **dadurch gekennzeichnet** , daß das Maß der Längsverschiebbarkeit der Verbindungslasche (17) in der Gleitkammer (18) des benachbarten Deckels (15) an die Abwinkelbarkeit der Kettenglieder (1) zueinander angepaßt ist.

3. Energieführungskette nach Anspruch 1 oder 2, **dadurch gekennzeichnet**, daß die Verbindungslasche (17) einstückig mit dem Dekkel (15) ausgebildet ist.

4. Energieführungskette nach einem der Ansprüche 1 - 3, **dadurch gekennzeichnet**, daß die Verbindungslasche (17) als flexibles flaches Band mit rechteckigem Querschnitt ausgebildet ist.

5. Energieführungskette nach einem der Ansprüche 1 - 4, **dadurch gekennzeichnet**, daß die Verbindungslasche (17) an ihrem freien Ende T - förmig verbreitert ist.

6. Energieführungskette nach Anspruch 5, **dadurch gekennzeichnet**, daß die Öffnung (22) auf der nach Außen weisenden Seite der Gleitkammer (18) entsprechend der Form der Verbindungslasche (17) T - förmig ausgebildet ist.

7. Energieführungskette nach Anspruch 5 oder 6, **dadurch gekennzeichnet**, daß die Öffnung (23) auf der Stirnseite der Gleitkammer (18), die der Verbindungslasche (17) abgewandt ist, kleiner als die T - förmige Verbreiterung ist.

8. Energieführungskette nach einem der Ansprüche 1 - 7, **dadurch gekennzeichnet**, daß die Verbindungslasche (17) nur dann in die Gleitkammer (18) des benachbarten Deckels (15) einführbar und herausnehmbar ist, wenn der mit ihr verbundene Deckel (15) nicht auf ein Kettenglied (1) aufgeschnappt worden ist.

9. Energieführungskette nach einem der Ansprüche 1 - 8, **dadurch gekennzeichnet**, daß der Deckel (15) an seiner der dazugehörigen Verbindungslasche (17) abgewandten Stirnseite einen sich in Längsrichtung des Deckels erstreckenden Überstand (25) aufweist.

10. Energieführungskette nach Anspruch 9, **dadurch gekennzeichnet** , daß die Breite des Überstandes (25) im wesentlichen der Breite des Deckels (15) entspricht und daß der Überstand (25) einen Durchbruch (26) aufweist, dessen Breite im wesentlichen der Breite der T - förmigen Verbreiterung der Verbindungslasche (17) entspricht.

11. Energieführungskette nach einem der Ansprüche 1-10, **dadurch gekennzeichnet**, daß das Stabilisierungselement ein die Seitenwände (2,3) an ihren unteren Längskanten einstückig miteinander verbindender Quersteg (10) ist.

12. Energieführungskette nach einem der Ansprüche 1-11, **dadurch gekennzeichnet**, daß die Seitenwände (2,3) mit Anschlägen zur Begrenzung der Verschwenkung der Kettenglieder (1) versehen sind.

13. Energieführungskette nach einem der Ansprüche 1-12, **dadurch gekennzeichnet**, daß der Deckel (15) mit Krallen (27) versehen ist, die von Rastausschnitten (11) an den oberen Längskanten der Seitenwände (2,3) lösbar aufnehmbar sind.

14. Energieführungskette nach einem der Ansprüche 1-13, **dadurch gekennzeichnet**, daß die Seitenwände (2,3) jeweils ihren Innenseiten eine sich nach innen erstreckende Rastfeder (14) aufweisen.

15. Energieführungskette nach Anspruch 14 , **dadurch gekennzeichnet**, daß die Gleitkammer (18) jeweils an ihren Längsseiten eine Öffnung (24) aufweist, in die beim Aufschnappen des Deckels (15) die Rastfeder (14) der betreffenden Seitenwand (2,3) des Kettengliedes (1) eingreift.

## Claims

1. Power transmission chain, each link (1) of which displays two side walls (2, 3) and a stabilising element joining these at their longitudinal edges, as well as a cover which connects the two side walls and can be snapped onto one and/or both pairs of longitudinal edges, where the consecutive links are joined in pivoting fashion, the covers (15) can be fixed on the corresponding longitudinal edges of the side walls in a detachable fashion, and the covers of consecutive links can be connected together, characterised in that
- the cover (15) has a connecting strap (17) on one of its face ends,
- the cover (15) has a sliding chamber (18) to accommodate a connecting strap (17) of an adjacent cover (15),
- the connecting strap (17) of the adjacent cover (15) can be displaced longitudinally in the sliding chamber (18),
- the sliding chamber (18) has communicating openings (22, 23) on the outward-facing side of the cover (15) and on the face end pointing away from the connecting strap (17),
- the openings (22, 23) in the sliding chamber (18) are adapted to the shape of the connecting strap (17) in such a way that the connecting strap (17) of the adjacent cover (15) can be inserted into and withdrawn from them in one position, being held captive by the limits of the sliding chamber (18) following longitudinal displacement into any other position.

2. Power transmission chain as per Claim 1, characterised in that the extent of the longitudinal displacement of the connecting strap (17) in the sliding chamber (18) of the adjacent cover (15) is adapted to the possible deflection of the chain links (1) relative to each other.

3. Power transmission chain as per Claim 1 or 2, characterised in that the connecting strap (17) is designed as a single piece with the cover (15).

4. Power transmission chain as per one of the Claims 1 to 3, characterised in that the connecting strap (17) is designed as a flexible, flat strip of rectangular cross-section.

5. Power transmission chain as per one of the Claims 1 to 4, characterised in that the free end of the connecting strap (17) widens out into a T-shape.

6. Power transmission chain as per Claim 5, characterised in that the opening (22) on the outward-facing side of the sliding chamber (18) is of T-shaped design in keeping with the shape of the connecting strap (17).

7. Power transmission chain as per Claim 5 or 6, characterised in that the opening (23) on the face end of the sliding chamber (18) facing away from the connecting strap (17) is smaller than the wider, T-shaped part.

8. Power transmission chain as per one of the Claims 1 to 7, characterised in that the connecting strap (17) can only be inserted into and withdrawn from the sliding chamber (18) of the adjacent cover (15) if the cover (15) connected to it has not been snapped onto a chain link (1).

9. Power transmission chain as per one of the Claims 1 to 8, characterised in that the cover (15) has a projection (25), extending in the longitudinal direction of the cover, on the face end pointing away from the associated connecting strap (17).

10. Power transmission chain as per Claim 9, characterised in that the width of the projection (25) essentially corresponds to the width of the cover (15) and that the projection (25) has a cut-out (26), the width of which essentially corresponds to the width of the wider, T-shaped part of the connecting strap (17).

11. Power transmission chain as per one of the Claims 1 to 10, characterised in that the stabilising element consists of a cross-member (10) connecting the side walls (2, 3) at their lower longitudinal edges in a single piece.

12. Power transmission chain as per one of the Claims 1 to 11, characterised in that the side walls (2, 3) are provided with stops to limit the deflection of the chain links (1).

13. Power transmission chain as per one of the Claims 1 to 12, characterised in that the cover (15) is provided with claws (27) which can be accommodated in detachable form by snap-in cut-outs (11) on the upper longitudinal edges of the side walls (2, 3).

14. Power transmission chain as per one of the Claims 1 to 13, characterised in that the side walls (2, 3) display a detent spring (14) extending inwards on their inner sides.

15. Power transmission chain as per Claim 14, characterised in that the sliding chamber (18) has an opening (24) on each of its longitudinal sides, which the detent spring (14) of the corresponding side wall (2, 3) of the chain link (1) engages when the cover (15) is snap-mounted.

## Revendications

1. Chaîne conductrice d'énergie, dont les maillons (1) présentent chacun deux parois latérales (2, 3) et un élément de stabilisation qui relie celles-ci l'une à l'autre par leurs bords longitudinaux, ainsi qu'un couvercle encliquetable sur une paire et/ou sur les deux paires de bords longitudinaux et reliant les deux parois latérales, les maillons successifs étant joints entre eux de façon articulée, les couvercles (15) pouvant être fixés de manière amovible aux bords longitudinaux correspondants des parois latérales et les couvercles de maillons successifs pouvant être reliés entre eux, caractérisée en ce que
- le couvercle (15) comporte une languette de jonction (17) sur l'un de ses côtés frontaux,
- le couvercle (15) comporte une cavité de coulissement (18) pour recevoir une languette de jonction (17) d'un couvercle (15) voisin,
- la languette de jonction (17) du couvercle (15) voisin est mobile longitudinalement dans la cavité de coulissement (18),
- la cavité de coulissement (18) présente des ouvertures communicantes (22, 23) sur le côté du couvercle (15) dirigé vers l'extérieur et sur le côté frontal qui est à l'opposé de la languette de jonction (17),
- les ouvertures (22, 23) de la cavité de coulissement (18) sont adaptées à la forme de la languette de jonction (17), de telle sorte que, dans une position, la languette de jonction (17) du couvercle (15) voisin puisse être introduite dans cette cavité et en être extraite et qu'à la suite d'un déplacement longitudinal dans toute autre position, elle soit retenue captive par les limites de la cavité de coulissement (18).

2. Chaîne conductrice d'énergie selon la revendication 1, caractérisée en ce que la mesure dans laquelle la languette de jonction (17) est mobile longitudinalement dans la cavité de coulissement (18) du couvercle (15) voisin est adaptée à l'angle que les maillons (1) peuvent former entre eux.

3. Chaîne conductrice d'énergie selon la revendication 1 ou 2, caractérisée en ce que la languette de jonction (17) est formée d'une seule pièce avec le couvercle (15).

4. Chaîne conductrice d'énergie selon l'une quelconque des revendications 1 à 3, caractérisée en ce que la languette de jonction (17) est réalisée sous forme de ruban plat et flexible de section rectangulaire.

5. Chaîne conductrice d'énergie selon l'une quelconque des revendications 1 à 4, caractérisée en ce que la languette de jonction (17) est élargie en forme de T à son extrémité libre.

6. Chaîne conductrice d'énergie selon la revendication 5, caractérisée en ce que l'ouverture (22) sur le côté de la cavité de coulissement (18) dirigé vers l'extérieur est réalisée avec une forme de T correspondant à la forme de la languette de jonction (17).

7. Chaîne conductrice d'énergie selon la revendication 5 ou 6, caractérisée en ce que l'ouverture (23) sur le côté frontal de la cavité de coulissement (18) qui est à l'opposé de la languette de jonction (17) est plus petite que l'élargissement en forme de T.

8. Chaîne conductrice d'énergie selon l'une quelconque des revendications 1 à 7, caractérisée en ce que la languette de jonction (17) ne peut être introduite dans la cavité de coulissement (18) du couvercle (15) voisin ou extraite de ladite cavité que quand le couvercle (15) qui lui est raccordé n'est pas encliqueté sur un maillon (1).

9. Chaîne conductrice d'énergie selon l'une quelconque des revendications 1 à 8, caractérisée en ce que le couvercle (15) présente, sur son côté frontal situé à l'opposé de la languette de jonction (17) associée, une partie en porte à faux (25) qui s'étend dans la direction longitudinale du couvercle.

10. Chaîne conductrice d'énergie selon la revendication 9, caractérisée en ce que la largeur de la partie en porte à faux (25) correspond essentiellement à la largeur du couvercle (15), et en ce que la partie en porte à faux (25) présente une fente ajourée (26) dont la largeur correspond essentiellement à la largeur de l'élargissement en forme de T de la languette de jonction (17).

11. Chaîne conductrice d'énergie selon l'une quelconque des revendications 1 à 10, caractérisée en ce que l'élément de stabilisation est une barrette transversale (10) qui relie d'une seule pièce l'une à l'autre les parois latérales (2, 3) par leurs bords longitudinaux inférieurs.

12. Chaîne conductrice d'énergie selon l'une quelconque des revendications 1 à 11, caractérisée en ce que les parois latérales (2, 3) sont munies de butées pour limiter le pivotement des maillons (1).

13. Chaîne conductrice d'énergie selon l'une quelconque des revendications 1 à 12, caractérisée en ce que le couvercle (15) est muni de griffes (27) qui peuvent être reçues de façon amovible par des encoches d'encliquetage sur les bords longitudinaux supérieurs des parois latérales (2, 3).

14. Chaîne conductrice d'énergie selon l'une quelconque des revendications 1 à 13, caractérisée en ce que les parois latérales (2, 3) présentent chacune, sur leur côté interne, un ressort d'encliquetage (14) qui s'étend vers l'intérieur.

15. Chaîne conductrice d'énergie selon la revendication 14, caractérisée en ce que la cavité de coulissement (18) présente, sur chacun de ses côtés longitudinaux, une ouverture (24) dans laquelle le ressort d'encliquetage (14) de la paroi latérale (2, 3) correspondante du maillon (1) s'engage au moment de l'encliquetage du couvercle (15).
